**Europäisches Patentamt**

**European Patent Office**

**Office européen des brevets**

(19)

(11) Numéro de publication : **0 166 838**
**B1**

(12)

# FASCICULE DE BREVET EUROPÉEN

(45) Date de publication du fascicule du brevet :
28.09.88

(51) Int. Cl.⁴ : **H 04 L  1/24, H 04 L  7/04**

(21) Numéro de dépôt : 84430025.1

(22) Date de dépôt : 29.06.84

(54) Procédé et dispositif pour détecter une configuration de bits particulière dans un train de bits en série.

(43) Date de publication de la demande :
08.01.86 Bulletin 86/02

(45) Mention de la délivrance du brevet :
28.09.88 Bulletin 88/39

(84) Etats contractants désignés :
DE FR GB

(56) Documents cités :
US-A- 3 766 316
PATENTS ABSTRACTS OF JAPAN, vol. 7, no. 88 (E-170)[1233], 12 avril 1983; & JP - A - 58 15 351 (ANDOU DENKI K.K.) 28-01-1983
HEWLETT-PACKARD JOURNAL, vol. 30, no. 10, octobre 1979, pages 23-28, Palo Alto, US; R.E. ERDMANN Jr.: "A serial data analyzer for locating faults in decentralized digital systems"
IBM TECHNICAL DISCLOSURE BULLETIN, vol. 22, no. 11, avril 1980, pages 4956-4957, New York, US; J. CHOLAT-NAMY: "Local loop test for multiport modems"

(73) Titulaire : International Business Machines Corporation
Old Orchard Road
Armonk, N.Y. 10504 (US)
DE GB
Compagnie IBM FRANCE
5 Place Vendôme
F-75000 Paris 1er (FR)
FR

(72) Inventeur : Spagnol, Victor
12 Bis, Chemin des Collettes
F-06800 Cagnes-sur-Mer (FR)
Inventeur : Huon, Simon
Chemin du Trastour
F-06330 Roquefort-Les-Pins (FR)

(74) Mandataire : de Pena, Alain
Compagnie IBM France Département de Propriété Intellectuelle
F-06610 La Gaude (FR)

## Description

### Domaine Technique

La présente invention concerne les systèmes de communications, et plus particulièrement un procédé et un dispositif pour détecter une configuration de bits particulière dans un train de bits en série.

### Etat de la Technique

Un système de communications de données comprend basiquement deux équipements terminaux de données qui échangent des données à travers un circuit de données. Ce dernier comprend typiquement deux modems reliés entre eux par une ligne de transmission, chaque modem étant connecté directement à un équipement terminal de données auquel il est associé. La fonction principale d'un modem est de convertir les bits de données en provenance de l'équipement terminal de données en signaux appropriés à une transmission correcte à travers la ligne de transmission, et vice et versa. En fonctionnement en mode de données, c'est-à-dire pendant une transmission de données, les modems sont transparents aux bits de données qu'ils transfèrent de l'équipement terminal de données à la ligne de transmission, et à ceux qu'ils transfèrent de la ligne de transmission à l'équipement terminal de données.

Aujourd'hui, les systèmes de communications ont cru en complexité, et il n'est pas rare de rencontrer des systèmes comprenant plusieurs dizaines de modems. Cette complexité a créé le besoin de moyens capables d'assurer la maintenance automatique des systèmes, et plus particulièrement le besoin de moyens capables de tester automatiquement le fonctionnement des modems.

Une approche au test des modems est de le faire commander par les équipements terminaux de données. Cette approche nécessite que les équipements terminaux de données puissent échanger des données avec les modems, ce qui n'est pas le cas en fonctionnement en mode de données comme mentionné plus haut. Pour que cet échange de données puisse avoir lieu, il faut prévoir un moyen par lequel l'équipement terminal de données puisse informer le modem que les données qu'il va transmettre lui sont destinées.

L'article « Network Problem-Determination Aids in Microprocessor-Based Modems », par S. Huon et R. Smith, paru dans IBM Journal of Research and Development, Vol. 25, No. 1, January 1981, décrit une technique de test de modems selon laquelle l'équipement terminal de données informe le modem qui lui est attaché que les données qui vont suivre constituent une commande de test qui lui est destinée, en activant un fil de contrôle particulier, désigne TC, de l'interface équipement terminal de données-modem. Cette technique est limitée dans son application parce qu'elle nécessite que le modem et l'équipement terminal de données soient tous deux pourvus de ce fil de contrôle particulier et de leurs circuits de commande. Pour éliminer cette limitation, il a été proposé de remplacer le fil de contrôle particulier par une commande de mise en test envoyée par l'équipement terminal de données sur son fil de transmission de données, le modem devant surveiller en permanence les bits de données reçus de l'équipement terminal de données pour passer en mode non-transparent s'il détecte une commande de mise en test parmi ces bits de données.

La détection de cette commande pose deux problèmes principaux :

La commande doit avoir une configuration de bits particulière qui a très peu de chance d'être rencontrée pendant une transmission normale de données. On trouvera un exemple d'une telle configuration de bits dans l'article « Remote Modem Control », par M. CHOQUET et al., paru dans IBM Technical Disclosure Bulletin, Vol. 26, No. 2, May 1984, page 6636.

Le processus de détection de la configuration de bits ; particulière, qui se déroule en permanence, doit consommer le moins possible de puissance de calcul, celle-ci étant limitée dans les modems.

Le document Patent Abstracts of Japan, Vol. 7, No 88 (E-170) (1233), 12 avril 1983 — JP-A-58 15 351, 28.01.1983 décrit un dispositif pour mesurer l'erreur lors de la réception d'un signal, dans lequel le signal reçu est comparé avec une réplique de ce signal emmagasinée dans une mémoire morte dont l'adressage est commandé par un compteur. Lorsqu'il y a non correspondance entre le signal reçu et celui emmagasiné, le compteur est remis à zéro. Un autre compteur compte le nombre de correspondances entre le signal reçu et le signal emmagasiné.

### Exposé de l'Invention

L'objet de l'invention est de fournir un procédé et un dispositif pour détecter une configuration de bits particulière dans un train de bits en série, qui n'utilisent qu'une très faible puissance de calcul.

Le procédé de l'invention pour détecter une configuration de N bits particulière dans un train de bits en série, est caractérisé en ce qu'il consiste à :

a) examiner les bits du train de bits un par un,

b) consulter une première ou une seconde table selon que le bit examiné a une première ou seconde valeur, à l'adresse indiquée par un générateur d'adresses, la première table comprenant N inscriptions, la n-ième inscription contenant une condition de validité ou d'erreur selon que le n-ième bit de la configuration particulière à détecter a la première valeur binaire ou non, et la seconde table étant l'opposée de la première table, la n-ième inscription contenant une condition de validité ou d'erreur selon que le n-ième bit de la configuration particulière à détecter a la seconde valeur binaire ou non,

c) si la table consultée contient une condition de validité à l'adresse spécifiée par le générateur d'adresses, augmenter d'une unité le contenu du générateur d'adresses, puis examiner le bit suivant du train de bits,

d) si la table consultée contient une condition d'erreur à l'adresse spécifiée par le générateur d'adresses, et si cette adresse est celle de la première inscription de la table consultée, maintenir le contenu du générateur d'adresses à sa valeur, puis examiner le bit suivant du train de bits,

e) si la table consultée contient une condition d'erreur à l'adresse spécifiée par le générateur d'adresses, et si cette adresse n'est pas celle de la première inscription de la table consultée, restaurer le contenu du générateur d'adresses à sa première valeur, puis ré-examiner ce bit même bit selon les étapes b) à e), et

f) décider que la configuration particulière est détectée lorsque le générateur d'adresses spécifie la dernière inscription de la table consultée et cette dernière inscription contient une condition de validité.

L'invention propose aussi un dispositif pour détecter une configuration de bits particulière dans un train de bits en série.

D'autres objets, caractéristiques et avantages de la présente invention ressortiront mieux de l'exposé qui suit, fait en référence aux dessins annexes à ce texte, qui représentent des modes de réalisation préférés de l'invention.

Brève Description des Figures

La figure 1 est un bloc diagramme qui illustre un mode de réalisation de l'invention.

La figure 2 est un diagramme des temps qui illustre la forme des signaux de chronologie utilisés dans le dispositif de la figure 1.

La figure 3 est un diagramme qui illustre un autre exemple de réalisation de l'invention.

Description Détaillée de l'Invention

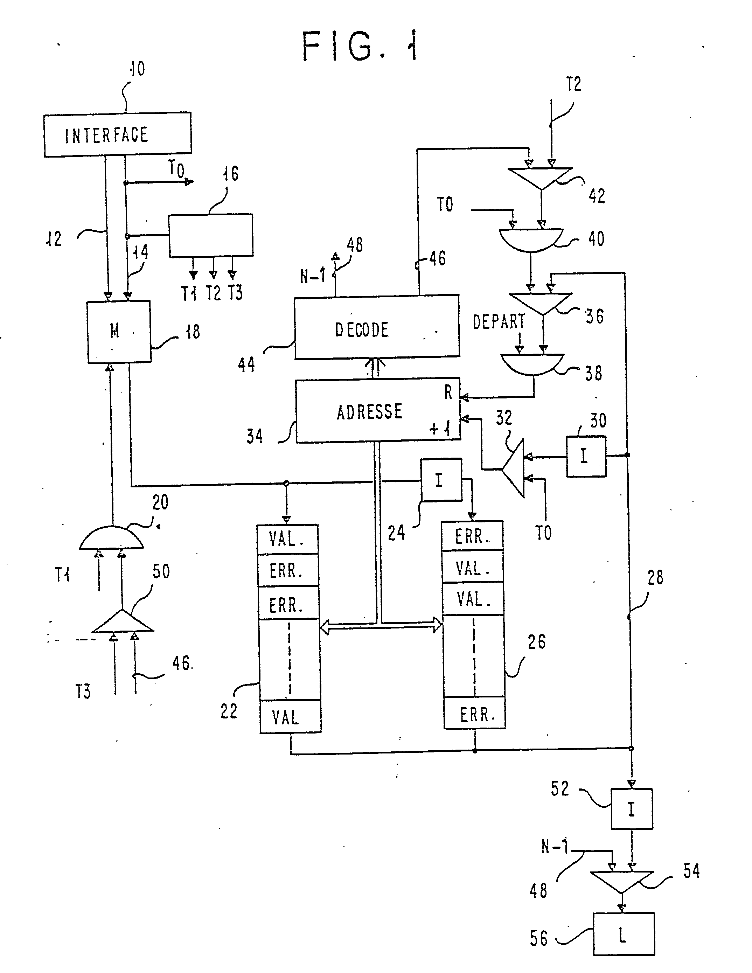

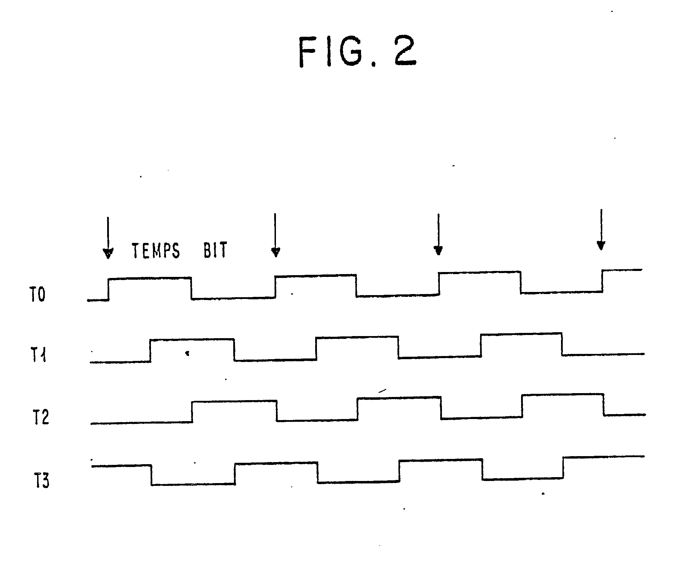

La figure 1 représente un bloc diagramme qui illustre un exemple de réalisation de l'invention, lorsque celle-ci est utilisée dans un modem pour détecter une configuration de bits particulière connue en provenance d'un équipement terminal de données auquel il est attaché. Le bloc 10 représente schématiquement l'interface entre le modem et l'équipement terminal de données ; cet interface peut être typiquement du type V24 défini par le CCITT. Les bits de données en provenance de l'équipement terminal de données sont appliqués au dispositif de l'invention par une ligne 12, à une cadence de 1/T bits par seconde définie par un signal de chronologie T0 sur une ligne 14. Cette ligne 14 est reliée à un dispositif de chronologie 16 qui dérive du signal T0 des signaux de

chronologie T1, T2 et T3 qui sont respectivement des versions retardées de T/4, T/2 et 3T/4 sec. du signal T0, comme illustré sur la figure 2.

La ligne 12 est reliée à l'entrée d'une mémoire à une position de bit 18 qui a son entrée de commande d'écriture reliée à la ligne 14, et son entrée de commande de lecture reliée à la sortie d'une porte OU 20. La sortie de la mémoire 18 est appliquée directement à l'entrée de commande de lecture d'une mémoire permanente de Nx1 positions 22, N étant le nombre de bits de la configuration de bits à détecter, et à travers un inverseur 24 à l'entrée de commande de lecture d'une mémoire permanente 26 similaire à la mémoire 22. La lecture de chacune des mémoires 22 et 26 est commandée par un bit « 0 » sur son entrée de commande de lecture. Les sorties des mémoires 22 et 26 sont reliées entre elles et à une ligne 28 qui est appliquée à l'entrée d'un inverseur 30 dont la sortie est appliquée à une porte ET 32 qui reçoit sur son autre entrée le signal de chronologie T0. La sortie de la ET 32 est appliquée à l'entrée d'incrémentation + 1 d'un compteur d'adresse 34 dont le nombre de positions de bits est choisi de telle sorte que le compteur 34 puisse générer N valeurs d'adresse différentes. La sortie du compteur d'adresse 34 est appliquée en parallèle à l'entrée d'adresse de chacune des mémoires 22 et 26. La ligne 28 est aussi reliée à une entrée d'une porte ET 36 dont la sortie est reliée à une entrée d'une porte OU 38 dont l'autre entrée reçoit un signal DEPART, et dont la sortie est appliquée à l'entrée de remise à zéro du compteur d'adresse 34. L'autre entrée de la porte ET 36 est reliée à la sortie d'une porte OU 40 dont une entrée reçoit le signal de chronologie T0 et l'autre entrée est reliée à la sortie d'une porte ET 42. Le compteur d'adresse 34 est couplé à un circuit de décodage 44 qui a une première sortie reliée par une ligne 46 à une entrée de la porte ET 42 qui reçoit à son autre entrée le signal de chronologie T2, et une seconde sortie qui est reliée à une ligne 48. Le circuit de décodage 44 active la ligne 46 lorsque le contenu du compteur 34 est différent de zéro, et la ligne 48 lorsque son contenu est égal à N-1. Le signal de chronologie T3 et la ligne 46 sont appliquées aux entrées d'une porte ET 50 dont la sortie est reliée à l'autre entrée de la porte OU 20. La ligne 28 est appliquée à un inverseur 52 dont la sortie est reliée à une entrée d'une porte ET 54 qui a son autre entrée reliée à la ligne 48 et sa sortie appliquée à une bascule à verrouillage 56.

La configuration de bits particulière à détecter est matérialisée dans le dispositif de la figure 1 par deux tables de décision, que l'on désignera respectivement par Table 0's et Table 1's, chacune d'elles étant stockée dans une des mémoires 22 et 26 et comprenant autant d'inscriptions qu'il y a de bits dans la configuration de bits à détecter. Dans chacune des tables, chaque inscription contient une condition correspondant au bit correspondant de la configuration de bits. On supposera, par exemple, que la configuration de bits à détecter est la suivante :

« 01101001010 ... 10 »

Dans la Table 0's, la première inscription contiendra une condition de validité, les seconde et troisième inscriptions contiendront une condition d'erreur, la quatrième inscription contiendra une condition de validité, etc.., la n-ième inscription contenant une condition de validité ou d'erreur selon que le n-ième bit de la configuration de bits à détecter est « 0 » ou « 1 ».

Dans la Table 1's, la première inscription contiendra une condition d'erreur, les seconde et troisième inscriptions contiendront une condition de validité, la quatrième inscription contiendra une condition d'erreur, etc..., la n-ième inscription contenant une condition de validité ou d'erreur selon que le n-ième bit de la configuration de bit à détecter est « 1 » ou « 0 ».

Les inscriptions de même rang dans les deux tables contiennent des conditions opposées. Dans l'exemple de réalisation illustré sur la figure 1, dans chacune des tables, les conditions de validité et d'erreur sont représentées respectivement par un bit « 0 » et un bit « 1 »

En fonctionnement, on supposera qu'initialement le compteur d'adresse 34 est à zéro, mis dans cet état, par exemple, par le signal DEPART qui lui est appliqué à travers la porte OU 38. A la première transition positive du signal T0, le premier bit reçu sur la ligne 12 est stocké dans la mémoire 18. A la première transition positive du signal T1, qui survient T/4 sec. après la première transition de T0, le bit stocké dans la mémoire 18 en est lu et appliqué à l'entrée de validation de la mémoire 22 et à celle de la mémoire 26 par l'intermédiaire de l'inverseur 24. Si ce bit a la valeur « 1 », seule la mémoire 26 est sélectionnée, et l'inscription de la table 1's contenue à l'adresse 0 de la mémoire 26 est lue sur la ligne 28. Comme le premier bit de la configuration à détecter est « 0 », cette inscription contient une condition d'erreur et c'est un bit « 1 » qui est appliqué à la ligne 28. Ce bit « 1 » est appliqué à la porte ET 36 et à la transition suivante du signal T0 le compteur d'adresse 34 sera remis à zéro. Si le bit reçu à la valeur « 0 » seule la mémoire 22 est sélectionnée, et l'inscription de la table 0's contenue à l'adresse 0 de la mémoire 22 est lue sur la ligne 28. Comme le premier bit de la configuration à détecter est « 0 », cette inscription contient une condition de validité, et, c'est un bit « 0 » qui est appliqué la ligne 28. Ce bit « 0 » bloque la porte ET 36, et conditionne la porte ET 32. A la transition suivante du signal T0, le contenu du compteur d'adresse 34 sera augmenté d'une unité.

A la seconde transition positive d'un signal T0, le second bit reçu sur la ligne 12 est stocké dans la mémoire 18, et le compteur d'adresse 34 est mis à zéro ou à un, selon que le bit reçu au temps bit précédant était en erreur ou valide, comme expliqué plus haut.

A la transition positive suivante du signal T1, le bit stocké dans la mémoire 18 en est lu et appliqué à l'entrée de la mémoire 22 et de l'inverseur 24. Si ce bit à la valeur « 1 », seule la mémoire 26 est sélectionnée, et la seconde inscription de la Table 1's contenue à l'adresse 1 de la mémoire 26 est lue sur la ligne 28. Comme le second bit de la configuration à détecter est « 1 », cette seconde inscription contient une condition de validité et c'est un bit « 0 » qui est appliqué à la ligne 28. Ce bit « 0 » bloque la porte ET 36, et conditionne la porte ET 32. A la transition suivante du signal T0, le contenu du compteur d'adresse 34 sera augmenté d'une unité.

Si le bit reçu a la valeur « 0 », seule la mémoire 22 est sélectionnée, et la seconde inscription de la Table 0's contenue à l'adresse 1 de la mémoire 22 est lue sur la ligne 28. Comme le second bit de la configuration à détecter est « 1 », cette seconde inscription contient une condition d'erreur, et c'est un bit « 1 » qui est appliqué à la ligne 28. Ce bit « 1 » est appliqué à la porte ET 36. Comme le contenu du compteur d'adresse 34 est différent de zéro, les deux portes ET 42 et 50 sont conditionnées à l'état conducteur par le signal NON 0 sur la ligne 46, et à la transition positive du signal T2, le compteur d'adresse 34 est remis à zéro par le bit « 1 » sur la ligne 28 qui lui est appliqué à travers les portes 36 et 38. A la transition positive du signal T3, le signal NON 0 sur la ligne 46 active l'entrée de commande de lecture de la mémoire 18, et le second bit reçu sur la ligne 12, qui est encore stocké dans la mémoire 18 en est lu et est présenté de nouveau sélectivement aux Table 1's et Table 0's mais cette fois-ci pour être comparé aux conditions contenues dans les premières inscriptions de ces tables.

D'une manière générale, lorsqu'un bit est reçu sur la ligne 12, on consulte celle des tables qui correspond à la valeur du bit reçu, à l'adresse contenue dans le compteur d'adresse 34. Si la table consultée contient à cette adresse une condition de validité, le contenu du compteur d'adresse 34 est augmenté d'une unité, et le dispositif attend l'arrivée d'un nouveau bit sur la ligne 12.

Si la table consultée contient une condition d'erreur à l'adresse spécifiée par le compteur d'adresse 34, si cette adresse est zéro, le compteur est maintenu à zéro en attente du bit suivant sur la ligne 12, et si cette adresse est différente de zéro, le compteur est remis à zéro, et le bit sur la ligne 12 est de nouveau présenté à cette table mais son adresse zéro.

Lorsque le compteur d'adresse contient l'adresse N-1, et la dernière inscription de la table consultée contient une condition de validité, un bit « 0 » est lu sur la ligne 28, et ce bit « 0 » est inversé par l'inverseur 52 et met à « 1 » la bascule 56 à travers la porte ET 54 rendue conductrice par le signal produit par le circuit de décodage 44 sur la ligne 48. L'état « 1 » de la bascule 56 indique que la configuration de bits particulière a été détectée.

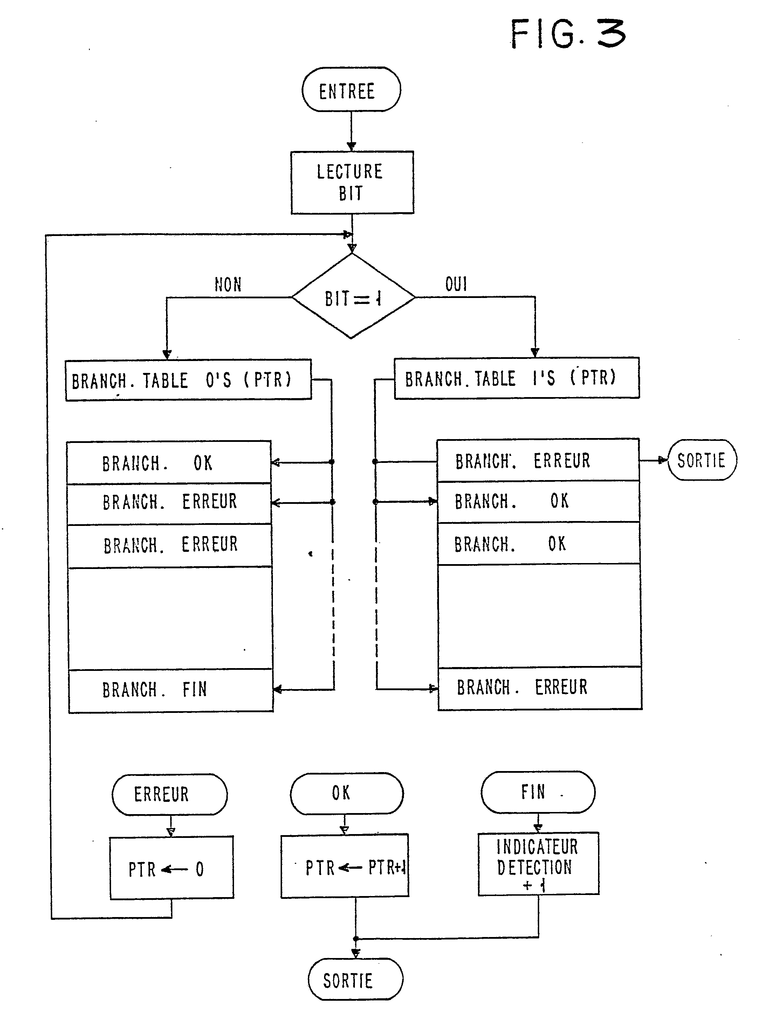

On a représenté sur la figure 3 un diagramme qui montre comment mettre en oeuvre le procédé de l'invention par microprogramme, et plus particulièrement comment mettre en oeuvre le procédé utilisant les tables Table 1's et Table 0's décrites en référence à la figure 1. Dans l'exemple illustré sur la figure 3, chacune des inscriptions des tables Table 1's et Table 0's contient une instruction de branchement inconditionnel comme décrit ci-après. Initialement, la valeur d'un pointeur PTR est mise à zéro. Le premier bit reçu est lu de l'interface. Si le bit est « 0 », il y a branchement sur la Table 0's à l'adresse indiquée par le pointeur PTR, c'est-à-dire à l'adresse zéro. Comme le premier bit de la configuration à détecter est « 0 », l'instruction contenue à l'adresse zéro est un branchement vers un sous-programme OK qui commande l'incrémentation du pointeur PTR puis l'attente d'un nouveau bit à traiter.

Si le premier bit reçu est « 1 », il y a branchement sur la Table 1's à l'adresse indiquée par le pointeur PTR, c'est-à-dire à l'adresse zéro. Comme le premier bit de la configuration à détecter est « 0 », l'instruction contenue à l'adresse zéro de la Table 1's est un branchement vers la sortie en l'attente d'un nouveau bit à traiter. Si le second bit reçu est un « 1 », il y a branchement à l'adresse 1 de la Table 1's, indiquée par le pointeur PTR. Comme ce bit est conforme au second bit de la configuration attendue, l'adresse 1 de la Table 1's contiendra une instruction de branchement au sous-programme OK. Si le second bit reçu est un bit « 0 », il y a branchement à l'adresse 1 de la Table 0's, indiquée par le pointeur PTR. Comme ce bit n'est pas conforme au second bit de la configuration attendue, l'adresse 1 de la Table 0's contiendra une instruction de branchement au sous-programme ERREUR qui commande la mise à zéro du pointeur PTR et une nouvelle présentation du second bit reçu à celle des tables qui est appropriée.

L'instruction contenue dans la dernière inscription de la Table 0's est un branchement à un sous-programme FIN qui commande la mise à « 1 » d'un indicateur de configuration détectée.

**Revendications**

1. Procédé pour détecter une configuration de N bits particulière dans un train de bits en série, caractérisé en ce qu'il consiste à :

a) examiner les bits du train de bits un par un,

b) consulter une première ou une seconde table selon que le bit examiné a une première ou seconde valeur, à l'adresse indiquée par un générateur d'adresses, la première table comprenant N inscriptions, la n-ième inscription contenant une condition de validité ou d'erreur selon que le n-ième bit de la configuration particulière à détecter a la première valeur binaire ou non, et la seconde table étant l'opposée de la première table, la n-ième inscription contenant une condition de validité ou d'erreur selon que le n-ième bit de la configuration particulière à détecter a la seconde valeur binaire ou non,

c) si la table consultée contient une condition de validité à l'adresse spécifiée par le générateur d'adresses, augmenter d'une unité le contenu du générateur d'adresses, puis examiner le bit suivant du train de bits,

d) si la table consultée contient une condition d'erreur à l'adresse spécifiée par le générateur d'adresses, et si cette adresse est celle de la première inscription de la table consultée, maintenir le contenu du générateur d'adresses à sa valeur, puis examiner le bit suivant du train de bits,

e) si la table consultée contient une condition d'erreur à l'adresse spécifiée par le générateur d'adresses, et si cette adresse n'est pas celle de la première inscription de la table consultée, restaurer le contenu du générateur d'adresses à sa première valeur, puis ré-examiner ce bit même bit selon les étapes b) à e), et

f) décider que la configuration particulière est détectée lorsque le générateur d'adresses spécifie la dernière inscription de la table consultée et cette dernière inscription contient une condition de validité.

2. Dispositif pour détecter une configuration de N bits particulière dans un train de bits en série, du type comprenant un premier moyen de mémorisation (22) dans lequel est emmagasinée une première table comprenant N inscriptions, la n-ième inscription contenant une condition de validité ou d'erreur selon que le n-ième bit de la configuration particulière à détecter a une première ou une seconde valeur binaire et un générateur d'adresses (34) pour adresser ledit premier moyen de mémorisation, caractérisé en ce qu'il comprend :

un deuxième moyen de mémorisation (26) dans lequel est emmagasinée une seconde table opposée de la première table, la n-ième inscription contenant une condition de validité ou d'erreur selon que le n-ième bit de la configuration particulière à détecter a ladite seconde valeur binaire ou non, ce second moyen de mémorisation étant adressé par le générateur d'adresses,

un troisième moyen de mémorisation (18) pour emmagasiner successivement les bits du train de bit,

des moyens (20) pour commander la lecture du bit en cours d'examen contenu dans le troisième moyen de mémorisation,

des moyens (24) pour sélectionner le premier ou le deuxième moyen de mémorisation selon que le bit en cours d'examen lu du troisième moyen de mémorisation a ladite première ou seconde valeur binaire, et commander la lecture de ce moyen de mémorisation sélectionné à l'adresse spécifiée par le générateur d'adresses,

des moyens (30, 32) pour augmenter d'une unité le contenu du générateur d'adresses, lorsque l'inscription lue du moyen de mémorisation sélectionné contient une condition de validité,

des moyens (36, 38, 40, 42) pour restaurer le contenu du générateur d'adresses à sa première valeur lorsque l'inscription lue du moyen de mémorisation sélectionné contient une condition d'erreur,

des moyens (42, 50) pour commander la relecture du bit en cours d'examen contenu dans le troisième moyen de mémorisation après que le contenu du générateur d'adresses ait été restauré à sa première valeur alors qu'il contenait avant cette restauration une adresse différente de la première adresse du moyen de mémorisation sélectionné, de telle sorte que le bit en cours d'examen soit de nouveau utilisé pour commander la sélection et la commande des premier et deuxième moyens de mémorisation, et

des moyens (52, 54, 56) pour indiquer que la configuration de bits particulière a été détectée lorsque le générateur d'adresses spécifie la dernière inscription du moyen de mémorisation sélectionné et que cette inscription contient une condition de validité.

**Claims**

1. A method of detecting a particular pattern of N bits in a serial train of bits, characterized in that it comprises the steps of :

(a) examining the individual bits contained in the train of bits,

(b) looking up a first or a second table depending on whether the bit being examined has a first or a second binary value, at the address provided by an address generator, said first table comprising N entries, with the $n^{th}$ entry denoting a match or a mismatch condition depending on whether the $n^{th}$ bit of the particular pattern to be detected has said first binary value or not, and said second table being the converse of said first table and its $n^{th}$ entry denoting a match or a mismatch condition depending on whether the $n^{th}$ bit of the particular pattern to be detected has said second binary value or not,

(c) if the table looked up contains a validity condition at the address specified by the address generator, incrementing by one the content of said address generator and then examining the next bit in the train of bits,

(d) if the table being looked up contains an error condition at the address specified by the address generator and if said address is that of the first entry in said table, maintaining the content of said address generator at its current value and then examining the next bit in the train of bits,

(e) if the table being looked up contains an error condition at the address specified by the address generator and if said address is not that of the first entry in said table, resetting the content of the address generator to its first value and then reexamining the same bit according to steps (b) through (e), and

(f) determining that the particular pattern has been detected where the address generator specifies the last entry in the table being looked up and said last entry denotes a match condition.

2. A device for detecting a particular pattern of N bits in a serial train of bits, of the type including first storage means (22) storing a first table of N entries, with the $n^{th}$ entry denoting a match or a mismatch condition depending on whether the $n^{th}$ bit of the particular pattern to be detected has a first or a second binary value and an address generator (34) for addressing said first storage means, characterized in that it comprises :

second storage means (26) storing a second table that is the converse of the first table, with the $n^{th}$ entry denoting a match or a mismatch condition depending on whether the $n^{th}$ bit of the particular pattern to be detected has said second binary value or not, said second storage means being addressed by said address generator,

third storage means (18) for successively storing the bits in said train of bits,

means (20) for causing the bit contained in said third storage means and being examined to be read out,

means (24) for selecting either the first or the second storage means depending on whether the bit read from said third storage means and being examined has said first or second binary value, and for causing the content of the selected storage means at the address specified by the address generator to be read out,

means (30, 32) for incrementing by one the content of the address generator whenever the entry read out of the selected storage means denotes a match condition,

means (36, 38, 40, 42) for resetting the content of the address generator to its initial value whenever the entry read out of the selected storage means denotes a mismatch condition,

means (42, 50) for causing the bit contained in said third storage means and being examined to be read again after the content of the address generator has been reset to its initial value, whereas the address contained therein prior to such resetting operation was different from the first address of the selected storage means, so that the bit being examined can be reused for causing the first and second storage means to be selected and activated, and

means (52, 54, 56) for indicating that said particular bit pattern has been detected whenever the address generator specifies the last entry in the selected storage means and said entry denotes a match condition.

**Patentansprüche**

1. Verfahren für die Detektion einer besonderen Konfiguration von N Bits in einer Folge von Bits in Reihe, dadurch gekennzeichnet, dass es darin besteht,

a) die Bits der Bitfolge einzeln zu prüfen,

b) eine erste oder eine zweite Tabelle einzusehen, je nachdem das geprüfte Bit einen ersten oder einen zweiten Wert aufweist, wobei die erste Tabelle N Eintragungen enthält, die n-te Eintragung eine Bedingung gültig oder ungültig enthält, je nachdem das n-te Bit der zu detektierenden besonderen Konfiguration den ersten Wert binär hat oder nicht, und die zweite Tabelle der ersten Tabelle entgegengesetzt ist, die n-te Eintragung eine Bedingung gültig oder ungültig enthält, je nachdem das n-te Bit der zu detektierenden besonderen Konfiguration den zweiten Wert binär hat oder nicht,

c) wenn die eingesehene Tabelle an der vom Adressengenerator spezifizierten Adresse einen Zustand « gültig » enthält, den Inhalt des Adressengenerators um eine Einheit zu beaufschlagen und dann das nächste Bit der Bitfolge zu prüfen,

d) wenn die eingesehene Tabelle an der vom Adressengenerator spezifizierten Adresse einen Zustand « ungültig » enthält, und wenn diese Adresse die der ersten Eintragung der eingesehenen Tabelle ist, den Inhalt des Adressengenerators auf seinem Wert zu halten, und dann das nächste Bit der Bitfolge zu prüfen,

e) wenn die eingesehene Tabelle an der vom Adressengenerator spezifizierten Adresse einen Zustand ungültig » enthält, und wenn diese Adresse nicht die der ersten Eintragung der eingesehenen Adresse ist, den Inhalt des Adressengenerators wieder auf seinen ersten Wert zu bringen, dann dieses Bit noch einmal nach den Schritten b) bis e) zu prüfen, und

f) zu beschliessen, dass die besondere Konfiguration detektiert wird, wenn der Adressengenerator die letzte Eintragung der eingesehenen Tabelle spezifiziert und diese letzte Eintragung einen Zustand « gültig » enthält.

2. Vefahren für die Detektion einer besonderen Konfiguration von N Bits in einer Folge von Bits in Reihe, vom Typ mit einem ersten Speichermittel (22) in dem eine erste Tabelle mit N Eintragungen abgespeichert ist, und die n-te Eintragung einen Zustand « gültig » oder « ungültig » enthält, je nachdem das n-te Bit der zu detektierenden besonderen Konfiguration einen ersten oder einen zweiten binären Wert aufweist, und einen Adressengenerator (34), um das besagte erste Speichermittel zu adressieren, dadurch gekennzeichnet, dass es umfasst :

ein zweites Speichermittel (26), in dem eine zweite Tabelle gespeichert ist, die der ersten Tabelle entgegengesetzt ist, und in der die n-te Eintragung einen Zustand « gültig » oder « ungültig » enthält, so dass das n-te Bit der zu detektierenden besonderen Konfiguration den besagten zweiten Wert binär oder nicht hat, wobei dieses zweite Speichermittel durch den Adressengenerator adressiert wird,

ein drittes Speichermittel (18) für die aufeinanderfolgende Speicherung der Bits der Bitfolge,

Mittel (20) für die Steuerung der Ablesung des Bit, das gerade geprüft wird, und das im dritten Speichermittel enthalten ist,

Mittel (24) für die Auswahl des ersten oder des zweiten Speichermittels je nachdem das gerade geprüfte, aus dem dritten Speichermittel gelesene Bit den besagten ersten oder zweiten Wert binär hat, und für die Steuerung der Lesung dieses ausgewählten Speichermittels an die vom Adressengenerator spezifizierte Adresse,

Mittel (30, 32), um den Inhalt des Adressenspeichers um eine Einheit zu beaufschlagen, wenn die aus dem ausgewählten Speichermittel gelesene Eintragung einen Zustand « gültig » enthält,

Mittel (36, 38, 40, 42) für die Auffrischung des Inhalts des Adressengenerators auf seinen ersten Wert, wenn die aus dem ausgewählten Speichermittel gelesene Eintragung einen Zustand « ungültig » enthält,

Mittel (42, 50) für die Steuerung der wiederholten Lesung des gerade geprüften, im dritten Speichermittel enthaltenen Bits, nachdem der Inhalt des Adressengenerators auf seinen ersten Wert aufgefrischt wurde, während er vor dieser Auffrischung eine von der ersten Adresse des ausgewählten Speichermittels verschiedene Adresse enthielt, so dass das gerade geprüfte Bit wieder für die Auswahl und Steuerung des ersten und zweiten Speichermittels verwendet wird, und

Mittel (52, 54, 56), um anzuzeigen, dass die besondere Bitkonfiguration detektiert wurde, wenn der Adressengenerator die letzte Eintragung des ausgewählten Speichermittels spezifiziert und wenn diese Eintragung einen Zustand « gültig » enthält.

# FIG. 1

# FIG. 2

TEMPS BIT

T0

T1

T2

T3

# FIG. 3